# EUROPEAN PATENT APPLICATION

(11) **EP 4 435 999 A1**
(43) Date of publication of application: **25.09.2024**
(21) Application number: 23874520.2
(22) Date of filing: 07.08.2023
(51) Int. Cl.: H02J 7/00, H02J 7/34

(54) **IN-VEHICLE BACKUP CONTROL DEVICE**

(30) Priority: 07.10.2022 JP 2022162326
(71) Applicant: AutoNetworks Technologies, Ltd., Yokkaichi-shi, Mie 510-8503 (JP); SUMITOMO WIRING SYSTEMS, LTD., Yokkaichi-shi, Mie 510-8503 (JP); SUMITOMO ELECTRIC INDUSTRIES, LTD., Osaka-shi, Osaka 541-0041 (JP); JTEKT Corporation, Kariya-shi, Aichi 448-8652 (JP)
(72) Inventor: MASUDA, Kazuki, Yokkaichi-shi, Mie 510-8503 (JP); HIGUCHI, Yutaka, Yokkaichi-shi, Mie 510-8503 (JP); MIO, Takumi, Kariya-shi, Aichi 448-8652 (JP); KOMATSUBARA, Yukihiro, Kariya-shi, Aichi 448-8652 (JP); OHMI, Naoki, Kariya-shi, Aichi 448-8652 (JP)
(74) Representative: Horn Kleimann Waitzhofer Schmid-Dreyer Patent- und Rechtsanwälte PartG mbB
(86) International application number: PCT/JP2023/028740
(87) International publication number: WO 2024/075387

(57) **Abstract**

To make it easy to take certain countermeasure in a situation where a certain degree of deterioration of a power storage unit is anticipated, an in-vehicle backup control device (2) is used in an in-vehicle power supply system (100) including a power supply unit (90) and a power storage unit (93). The in-vehicle backup control device (2) includes a discharging unit (charging/discharging unit (11)) that discharges the power storage unit (93) and a control unit (13) that controls the discharging unit. The control unit (13) executes countermeasure processing when the voltage of the power storage unit (93) falls below a threshold voltage (Vth) and an elapsed time period during which the voltage of the power storage unit (93) is below the threshold voltage (Vth) exceeds a predetermined time period (TJ).

## Description

### TECHNICAL FIELD

The present disclosure relates to an in-vehicle backup control device.

### BACKGROUND ART

An instantaneous voltage drop countermeasure device disclosed in Patent Literature 1 supplies AC power from an AC power supply to a load when there is no abnormality in the AC power supply. When the voltage or frequency of the AC power supply deviates from a predetermined range, this device supplies AC power from a power storage device to the load via a power conversion device. When the voltage of the power storage device reaches a determination value which is determined based on a recommended lower limit voltage, the device stops the operation of supplying the power from the power conversion device to the load. The determination value determined based on the recommended lower limit voltage is a voltage value obtained by subtracting from the recommended lower limit voltage of the power storage device, a voltage drop amount estimated from a discharge current from the power storage device and an internal resistance value of the power storage device. According to this configuration, even when the voltage of the power storage device reaches the recommended lower limit voltage, the power supply operation can be continued as long as the voltage does not reach the determination value considering the internal resistance value.

### CITATIONS LIST

### PATENT LITERATURE

Patent Literature 1: JP 2010-172047 A

### SUMMARY OF INVENTION

### TECHNICAL PROBLEMS

In some power storage units (power storage devices), when the voltage of the power storage unit falls below a threshold voltage, a chemical reaction starts, leading to deterioration of the power storage unit. Such a power storage unit may start to deteriorate, even though the voltage has not reached the above-described determination value, due to the voltage falling below the threshold voltage. When the power storage unit deteriorates to a certain degree, it is desirable to take a certain countermeasure.

An object of the present disclosure is to provide a technique that makes it easy to take a certain countermeasure in a situation where a certain degree of deterioration of a power storage unit is anticipated.

### SOLUTIONS TO PROBLEMS

An in-vehicle backup control device of the present disclosure is an in-vehicle backup control device used in an in-vehicle power supply system including a power supply unit for supplying power to a power supply target, and a power storage unit for supplying power to the power supply target when power supply from the power supply unit is in an abnormal state, the in-vehicle backup control device including:
a discharging unit configured to discharge the power storage unit; and
a control unit that controls the discharging unit, wherein
the control unit is configured to execute countermeasure processing when a voltage of the power storage unit falls below a threshold voltage and an elapsed time period during which the voltage of the power storage unit is below the threshold voltage exceeds a predetermined time period.

### ADVANTAGEOUS EFFECTS OF INVENTION

The technique of the present disclosure makes it easy to take a certain countermeasure in a situation where a certain degree of deterioration of a power storage unit is anticipated.

### BRIEF DESCRIPTION OF DRAWINGS

Fig. 1 is a block diagram schematically illustrating an example of an in-vehicle power supply system including an in-vehicle backup device according to a first embodiment.
Fig. 2 is a flowchart illustrating an example of a flow of control performed by the in-vehicle backup device according to the first embodiment.
Fig. 3 is a timing chart illustrating an example of a change in voltage of a power storage unit over time, in a case where no countermeasure processing is executed according to the first embodiment.
Fig. 4 is a timing chart illustrating an example of a change in voltage of a power storage unit over time, in a case where countermeasure processing is executed according to the first embodiment.
Fig. 5 is a timing chart illustrating an example of a change in voltage of a power storage unit over time, in a case where countermeasure processing is executed according to a second embodiment.

### DESCRIPTION OF EMBODIMENT

Exemplary embodiments of the present disclosure will be listed and described below.
[1] An in-vehicle backup control device used in an in-vehicle power supply system including a power supply unit for supplying power to a power supply target, and a power storage unit for supplying power to the power supply target when power supply from the power supply unit is in an abnormal state, the in-vehicle backup control device including:
   a discharging unit configured to discharge the power storage unit; and
   a control unit configured to control the discharging unit, wherein
   the control unit is configured to execute countermeasure processing when a voltage of the power storage unit falls below a threshold voltage and an elapsed time period during which the voltage of the power storage unit is below the threshold voltage exceeds a predetermined time period.
   In a case where the start voltage at which chemical reaction of the power storage unit starts is set as the threshold voltage, and the voltage of the power storage unit falls below the threshold voltage, and the elapsed time period during which the voltage of the power storage unit is below the threshold voltage exceeds the predetermined time period, a certain degree of deterioration of the power storage unit is anticipated. The in-vehicle backup control device executes the countermeasure processing when the elapsed time period exceeds the predetermined time period in a state where the start voltage is set as the threshold voltage, thereby being able to execute the countermeasure processing in a situation where a certain degree of deterioration of the power storage unit is anticipated. That is, by simply setting the start voltage as the threshold voltage, the in-vehicle backup control device can execute the countermeasure processing in a situation where a certain degree of deterioration of the power storage unit is anticipated. Thus, the in-vehicle backup control device makes it easy to take a certain countermeasure in a situation where a certain degree of deterioration of a power storage unit is anticipated.
[2] The in-vehicle backup control device according to1], wherein the control unit is configured to set the threshold voltage based on a temperature of the power storage unit.
   The in-vehicle backup control device described above can set the threshold voltage reflecting the temperature of the power storage unit.
[3] The in-vehicle backup control device according to [1] or [2], wherein the control unit is configured to execute the countermeasure processing when the voltage of the power storage unit becomes higher than the threshold voltage without the elapsed time period exceeding the predetermined time period and then falls below the threshold voltage again, and a total time period during which the voltage of the power storage unit is below the threshold voltage exceeds the predetermined time period.
   There may be a case where discharging of the power storage unit is stopped before the elapsed time period exceeds the predetermined time period, and the voltage of the power storage unit returns to be higher than the threshold voltage which is set at the start voltage. In this case, when the voltage of the power storage unit falls below the threshold voltage again, and if the previous deterioration is remaining, the power storage unit could deteriorate to a certain degree before the elapsed time period after the voltage falls below the threshold voltage again exceeds the predetermined time period. Therefore, the in-vehicle backup control device is configured to execute the countermeasure processing when the total time period exceeds the predetermined time period. Thus, the in-vehicle backup control device can execute the countermeasure processing in a situation where a certain degree of cumulative deterioration is anticipated as a result of the voltage of the power storage unit falling below the threshold voltage a plurality of times when the start voltage is set as the threshold voltage.
[4] The in-vehicle backup control device according to any one of [1] to [3], wherein the countermeasure processing is processing of stopping discharging of the power storage unit.

### <First embodiment>

### 1. Basic configuration of in-vehicle backup device 1

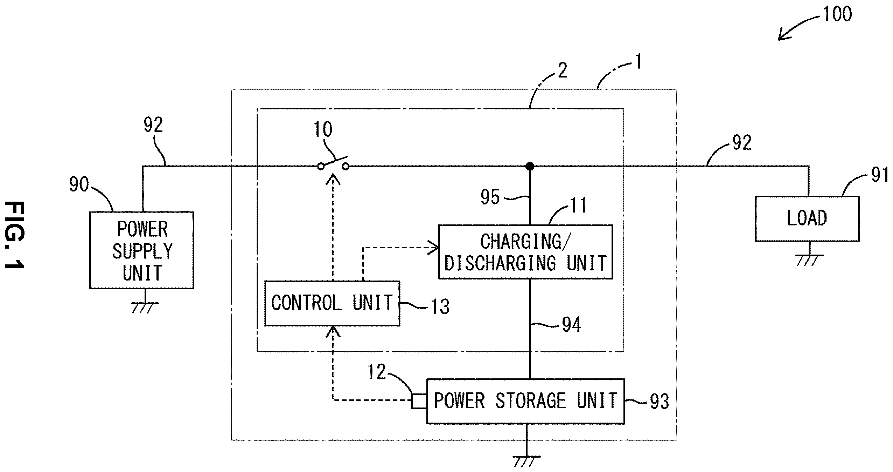

Fig. 1 illustrates an in-vehicle power supply system 100 including an in-vehicle backup device 1 according to a first embodiment. The in-vehicle power supply system 100 includes a power supply unit 90, a load 91, and a power path 92. The in-vehicle power supply system 100 supplies power based on the power supply unit 90 to the load 91 through the power path 92.

The power supply unit 90 supplies power to the load 91 through the power path 92. The power supply unit 90 is a known battery for example. The battery may be a lead battery, a lithium ion battery, or another battery. A high potential side terminal of the power supply unit 90 is electrically connected to the power path 92. The power supply unit 90 applies a predetermined output voltage to the power path 92. Alow potential side terminal of the power supply unit 90 is electrically connected to the ground and set at a ground potential, for example.

The load 91 is an example of "power supply target". The load 91 is, for example, a known electrical component. One end of the load 91 is electrically connected to the power path 92. The other end of the load 91 is electrically connected to the ground and set at a ground potential, for example.

The power path 92 is provided between the power supply unit 90 and the load 91. The power path 92 functions as at least part of a path through which power based on the power supply unit 90 is supplied toward the load 91.

The in-vehicle backup device 1 includes a power storage unit 93 and an in-vehicle backup control device 2.

The power storage unit 93 supplies power to the load 91 when power supply from the power supply unit 90 is in an abnormal state. "Power supply from the power supply unit 90 is in an abnormal state" is, for example, "power supply from the power supply unit 90 is in a state of being interrupted", "power supply from the power supply unit 90 is in a state of being insufficient", and the like. Specifically, "power supply from the power supply unit 90 is in an abnormal state" is "a voltage value of the power path 92 is in an abnormal state", "a current value of the power path 92 is in an abnormal state", and the like. "A voltage value of the power path 92 is in abnormal state" is, for example, "a voltage value of the power path 92 is in a low voltage state". "A voltage value of the power path 92 is in a low voltage state" is, for example, "a voltage value of the power path 92 is in a state of falling below a low voltage threshold". "A current value of the power path 92 is in an abnormal state" is, for example, "a current value of the power path 92 is in an overcurrent state". "A current value of the power path 92 is in an overcurrent state" is, for example, "a current value of the power path 92 is in a state of exceeding an overcurrent threshold".

The power storage unit 93 is deteriorated by chemical reaction starting when the voltage of the power storage unit 93 falls below a certain voltage. The start voltage at which the chemical reaction starts is higher than 0 V, and is lower than the charge voltage when the power storage unit 93 is fully charged. The power storage unit 93 is formed by, for example, a known power storage device. The power storage device may be, for example, a lead battery, a lithium ion battery, an electric double layer capacitor (EDLC), or other power storage means. A high potential side terminal of the power storage unit 93 is electrically connected to a first conduction path 94. The power storage unit 93 applies a predetermined output voltage to the first conduction path 94. The power storage unit 93 can supply power to the load 91 through the first conduction path 94. A low potential side terminal of the power storage unit 93 is electrically connected to the ground and set at a ground potential, for example.

The in-vehicle backup control device 2 is used in the in-vehicle power supply system 100. The in-vehicle backup control device 2 supplies power to the load 91 from the power storage unit 93 when power supply from the power supply unit 90 is in an abnormal state. The in-vehicle backup control device 2 includes a switching unit 10, a charging/discharging unit 11, a temperature detection unit 12, and a control unit 13.

The switching unit 10 is provided in the power path 92. The switching unit 10 is switched between an allowing state in which the flow of current from the power supply unit 90 side to the load 91 side is allowed, and an interrupting state in which the flow of current from the power supply unit 90 side to the load 91 side is interrupted. The switching unit 10 includes a switch, for example. The switch may be a mechanical switch, or a semiconductor switch.

The charging/discharging unit 11 is an example of a discharging unit. The charging/discharging unit 11 is formed as a charging/discharging circuit. The charging/discharging unit 11 charges the power storage unit 93. The charging/discharging unit 11 is provided between the power supply unit 90 and the power storage unit 93. The charging/discharging unit 11 performs a charging operation of supplying power based on the power supply unit 90 to the power storage unit 93. The charging/discharging unit 11 discharges the power storage unit 93. The charging/discharging unit 11 is provided between the power storage unit 93 and the load 91. The charging/discharging unit 11 performs a discharging operation of supplying power based on the power storage unit 93 toward the load 91.

The charging/discharging unit 11 includes a switch, for example. The switch may be a mechanical switch, or a semiconductor switch. The charging/discharging unit 11 may be formed by a switch only, or may include an element other than the switch. For example, the charging/discharging unit 11 may be a voltage conversion unit that converts (specifically, steps up or steps down) the input voltage, and outputs the resultant voltage. The voltage conversion unit is configured as a DC-DC converter, for example.

One end of the charging/discharging unit 11 is electrically connected to the first conduction path 94. The charging/discharging unit 11 is electrically connected to the power path 92 through a second conduction path 95. The second conduction path 95 is connected to a portion of the power path 92 closer to the load 91 than the switching unit 10. When the charging/discharging unit 11 performs a charging operation, the switching unit 10 is controlled to be in the allowing state. When the charging/discharging unit 11 performs the charging operation, the power based on the power supply unit 90 is supplied to the power storage unit 93 through the power path 92, the second conduction path 95, and the first conduction path 94. When the charging/discharging unit 11 performs the discharging operation, the power based on the power storage unit 93 is supplied to the load 91 through the first conduction path 94, the second conduction path 95, and the power path 92.

The temperature detection unit 12 detects the temperature of the power storage unit 93. The temperature detection unit 12 may be formed by a PTC thermistor, NTC thermistor, or another temperature detection element. The temperature detection unit 12 is attached to the power storage device forming the power storage unit 93. The temperature detection unit 12 outputs a signal with which a detection value can be identified.

The control unit 13 include a micro controller unit (MCU), for example. The control unit 13 acquires the output voltage from the power storage unit 93. The method of the acquisition is not particularly limited, and a known method may be used. The control unit 13 acquires the temperature of the power storage unit 93 based on a signal output from the temperature detection unit 12.

The control unit 13 controls the switching unit 10. When an allowing condition is satisfied, the control unit 13 switches the switching unit 10 to the allowing state. The allowing condition may be, for example, that a vehicle start switch (such as an ignition switch or a power switch for example) is switched to an ON state, may be that a predetermined operation of a user is performed, or may be other conditions. For example, the control unit 13 acquires an ON/OFF signal indicating an ON/OFF state of the start switch, and identifies the ON/OFF state of the start switch based on the ON/OFF signal. When the switching unit 10 is switched to the allowing state, the power based on the power supply unit 90 is supplied to the load 91.

When an interruption condition is satisfied, the control unit 13 switches the switching unit 10 to the interrupting state. The interruption condition may be, for example, that the start switch is switched to an OFF state, may be that a predetermined operation of the user is performed, may be that power supply from the power supply unit 90 becomes an abnormal state, or may be other conditions. When the switching unit 10 is switched to the interrupting state, power supply from the power supply unit 90 to the load 91 is interrupted.

The control unit 13 controls the charging/discharging unit 11. When a charging condition is satisfied, the control unit 13 controls the switching unit 10 to be in the allowing state, and makes the charging/discharging unit 11 perform the charging operation. Thus, the charging/discharging unit 11 charges the power storage unit 93. The charging condition may be that the discharging operation by the charging/discharging unit 11 is ended, may be that the output voltage of the power storage unit 93 falls below a charging lower limit voltage, or may be other conditions.

When a discharging condition is satisfied, the control unit 13 makes the charging/discharging unit 11 perform the discharging operation. Thus, the charging/discharging unit 11 discharges the power storage unit 93, and the power based on the power storage unit 93 is supplied to the load 91. The discharging condition may be that power supply from the power supply unit 90 becomes an abnormal state, or may be other conditions.

The control unit 13 executes the countermeasure processing when the voltage of the power storage unit 93 falls below a threshold voltage Vth and an elapsed time period during which the power storage unit 93 is below a threshold voltage Vth exceeds a predetermined time period TJ. In the present embodiment, the countermeasure processing is to stop the discharging of the power storage unit 93, but may be other types of processing. In the present embodiment, the threshold voltage Vth is set to be a voltage that is the same as the start voltage at which the chemical reaction of the power storage unit 93 starts. The voltage that is the same as the start voltage does not need to be strictly the same as the start voltage, and may be substantially the same as the start voltage. Being substantially the same as the start voltage means that deviation from the start voltage is within a 10% range. The threshold voltage Vth is preferably equal to or higher than the start voltage from the view point of avoiding a situation in which deterioration of the power storage unit 93 progresses even though the voltage of the power storage unit 93 is not below the threshold voltage Vth. The predetermined time period TJ is a time period required for the power storage unit 93 to deteriorate to a certain degree in a state where the voltage of the power storage unit 93 is below the start voltage.

In the present embodiment, the threshold voltage Vth is a variable value, but may be a fixed value. When a setting condition is satisfied, the control unit 13 sets the threshold voltage Vth based on the temperature of the power storage unit 93. The setting condition may be that the start switch is switched to the ON state, may be that discharging of the power storage unit 93 is started, or may be other conditions. The control unit 13 stores in advance, correspondence data indicating the correspondence relationship between the temperature of the power storage unit 93 and the start voltage. The correspondence data may be a table, or may be a function. When the correspondence data is a table, the correspondence data includes a plurality of temperatures and start voltage corresponding to each of the temperatures. The control unit 13 sets the threshold voltage Vth based on the correspondence data and the acquired temperature of the power storage unit 93. More specifically, the control unit 13 refers to the correspondence data, and sets, as the threshold voltage Vth, the start voltage corresponding to the acquired temperature of the power storage unit 93.

### 2. Example of operation of in-vehicle backup device 1

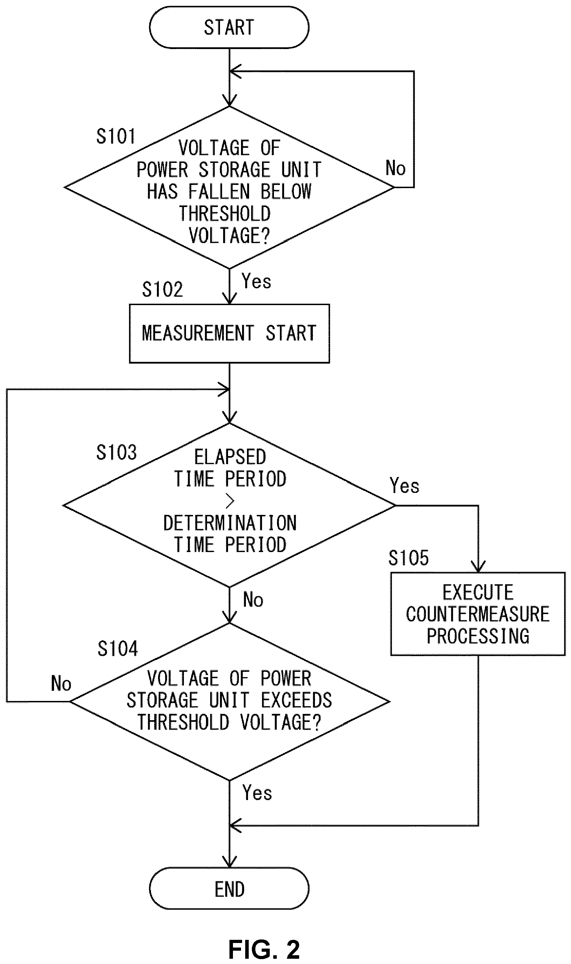

The control unit 13 executes processing illustrated in Fig. 2 when the start switch is switched to the ON state, for example. In step S101, the control unit 13 determines whether the voltage of the power storage unit 93 has fallen below the threshold voltage Vth. When determining that the voltage of the power storage unit 93 has not fallen below the threshold voltage Vth (No in step S101), the control unit 13 repeats the processing in step S101 until the voltage of the power storage unit 93 falls below the threshold voltage Vth. When determining that the voltage of the power storage unit 93 has fallen below the threshold voltage Vth (Yes in step S101), the control unit 13 starts measuring the elapsed time period in step S102.

In step S103, the control unit 13 determines whether the elapsed time period exceeds the predetermined time period TJ. When determining that the elapsed time period does not exceed the predetermined time period TJ (No in step S103), the control unit 13 determines in step S104, whether the voltage of the power storage unit 93 exceeds the threshold voltage Vth. When determining that the voltage of the power storage unit 93 does not exceed the threshold voltage Vth (No in step S104), the control unit 13 proceeds to step S103. Thus, the control unit 13 repeats the determination on whether the elapsed time period exceeds the predetermined time period TJ, in a state where the voltage of the power storage unit 93 is below the threshold voltage Vth.

When determining that the elapsed time period exceeds the predetermined time period TJ (Yes in step S103), the control unit 13 executes the countermeasure processing described above in step S105. Then, the control unit 13 ends the processing illustrated in Fig. 2.

When determining that the voltage of the power storage unit 93 exceeds the threshold voltage Vth (Yes in step S104), the control unit 13 ends the processing illustrated in Fig. 2, and immediately restarts the processing illustrated in Fig. 2.

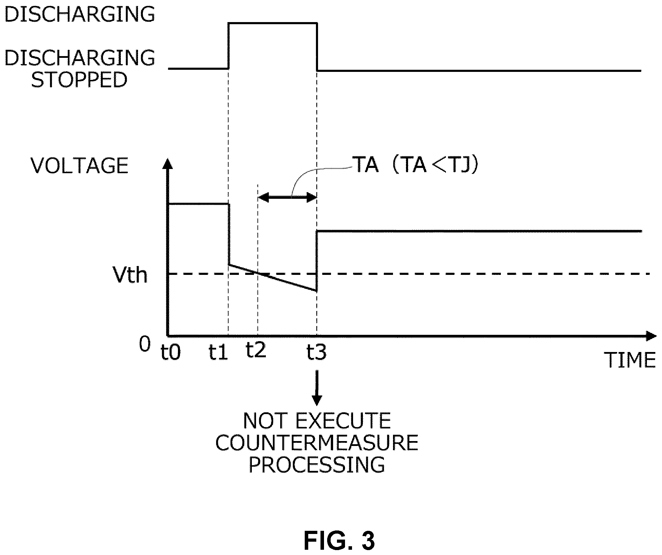

Fig. 3 illustrates a timing chart of a case where the countermeasure processing is not executed. At a timing t0, the power storage unit 93 is in a discharging stopped state, and the voltage of the power storage unit 93 is higher than the threshold voltage Vth. At a timing t1, when the power storage unit 93 is switched to the discharging state, the voltage of the power storage unit 93 drops sharply due to the internal resistance of the power storage unit 93. Even after having dropped sharply, however, the voltage of the power storage unit 93 is still higher than the threshold voltage Vth. Thereafter, at a timing t2, when the voltage of the power storage unit 93 falls below the threshold voltage Vth, the measurement of the elapsed time period starts. Thereafter, at a timing t3, when the power storage unit 93 is switched to the discharging stopped state, the voltage of the power storage unit 93 returns to a value higher than the threshold voltage Vth. In this case, since the voltage of the power storage unit 93 returns to a value higher than the threshold voltage Vth before the elapsed time period TA exceeds the predetermined time period TJ, the countermeasure processing is not executed.

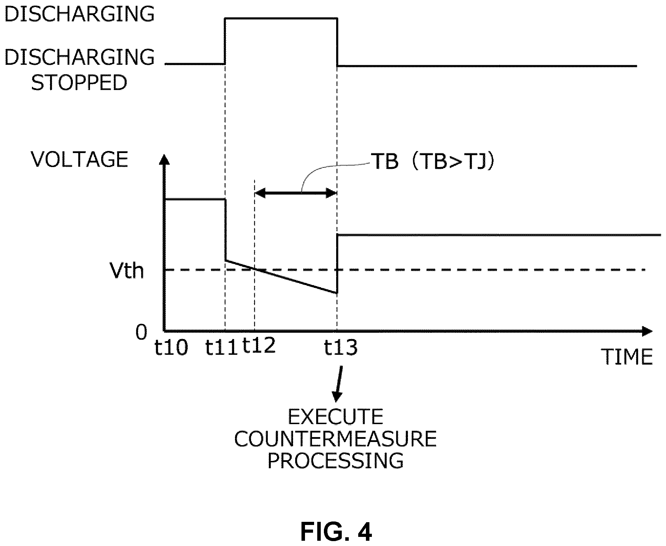

Fig. 4 illustrates a timing chart of a case where the countermeasure processing is executed. At a timing t10, the power storage unit 93 is in a discharging stopped state, and the voltage of the power storage unit 93 is higher than the threshold voltage Vth. At a timing t11, when the power storage unit 93 is switched to the discharging state, the voltage of the power storage unit 93 drops sharply due to the internal resistance of the power storage unit 93. Even after having dropped sharply, however, the voltage of the power storage unit 93 is still higher than the threshold voltage Vth. Thereafter, at a timing t12, when the voltage of the power storage unit 93 falls below the threshold voltage Vth, the measurement of the elapsed time period starts. Thereafter, at a timing t13, when the elapsed time period TB exceeds the predetermined time period TJ, the countermeasure processing is executed. In the present embodiment, since the countermeasure processing is to stop the discharging of the power storage unit 93, the discharging of the power storage unit 93 is stopped. As a result, the voltage of the power storage unit 93 returns to a value higher than the threshold voltage Vth.

### 3. Example of effect

In a case where the start voltage at which chemical reaction of the power storage unit 93 starts is set as the threshold voltage, and the voltage of the power storage unit 93 falls below the threshold voltage Vth, and the elapsed time period during the voltage of the power storage unit 93 is below the threshold voltage Vth exceeds the predetermined time period TJ, a certain degree of deterioration of the power storage unit 93 is anticipated. The in-vehicle backup control device 2 executes the countermeasure processing when the elapsed time period exceeds the predetermined time period TJ in a state where the start voltage is set as the threshold voltage Vth, thereby being able to execute the countermeasure processing in a situation where a certain degree of deterioration of the power storage unit 93 is anticipated. That is, by simply setting the start voltage as the threshold voltage Vth, the in-vehicle backup control device 2 can execute the countermeasure processing in a situation where a certain degree of deterioration of the power storage unit 93 is anticipated. Thus, the in-vehicle backup control device 2 makes it easy to take a certain countermeasure in a situation where a certain degree of deterioration of the power storage unit 93 is anticipated.

Furthermore, in the present embodiment, the threshold voltage Vth is set to be a voltage that is the same as the start voltage at which the chemical reaction of the power storage unit 93 starts. Therefore, the in-vehicle backup control device 2 can execute the countermeasure processing in a situation where a certain degree of deterioration of the power storage unit 93 is anticipated.

Furthermore, the in-vehicle backup control device 2 can set the threshold voltage Vth reflecting the temperature of the power storage unit 93.

### <Second embodiment>

In a second embodiment, a description is given on a configuration in which the countermeasure processing is executed when the total time period including a plurality of time periods during which the voltage of the power storage unit is below the threshold voltage exceeds the predetermined time period. An in-vehicle power supply system of the second embodiment has a configuration that is the same as that illustrated in Fig. 1 described in the first embodiment. Thus, the description of the second embodiment will be given with reference to Fig. 1.

The control unit 13 of the second embodiment executes the countermeasure processing when the voltage of the power storage unit 93 becomes higher than the threshold voltage Vth without the elapsed time period exceeding the predetermined time period TJ and then falls below the threshold voltage Vth again, and the total time period during which the voltage of the power storage unit 93 is below the threshold voltage Vth exceeds the predetermined time period TJ.

When the voltage of the power storage unit 93 exceeds the threshold voltage Vth without the elapsed time period exceeding the predetermined time period TJ, the control unit 13 stores the elapsed time period. Thereafter, when the voltage of the power storage unit 93 falls below the threshold voltage Vth again, the control unit 13 calculates the total time period which is obtained by adding the elapsed time period previously stored to the current elapsed time period. The control unit 13 executes the countermeasure processing when the total time period thus calculated exceeds the predetermined time period TJ.

When the voltage of the power storage unit 93 becomes higher than the threshold voltage Vth without the total time period exceeding the predetermined time period TJ, the control unit 13 stores the total time period or the current elapsed time period. Thereafter, when the voltage of the power storage unit 93 falls below the threshold voltage Vth again, the control unit 13 calculate the total time period which is obtained by adding the total time period previously stored or each of the elapsed time period previously stored to the current elapsed time period. The control unit 13 executes the countermeasure processing when the total time period thus calculated exceeds the predetermined time period TJ.

In this way, the control unit 13 executes accumulates the time period during which the voltage of the power storage unit 93 is below the threshold voltage, and executes the countermeasure processing when the total time period exceeds the predetermined time period TJ.

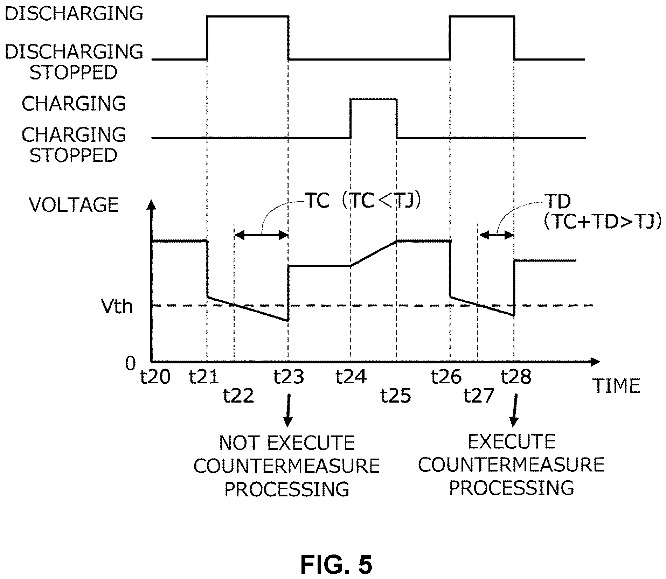

Fig. 5 illustrates a timing chart of a case where the countermeasure processing is executed. At a timing t20, the power storage unit 93 is in a discharging stopped state, and the voltage of the power storage unit 93 is higher than the threshold voltage Vth. At a timing t21, when the power storage unit 93 is switched to the discharging state, and the voltage of the power storage unit 93 drops sharply due to the internal resistance of the power storage unit 93. Even after having dropped sharply, however, the voltage of the power storage unit 93 is still higher than the threshold voltage Vth. Thereafter, at a timing t22, when the voltage of the power storage unit 93 falls below the threshold voltage Vth, the measurement of the elapsed time period starts. Thereafter, at a timing t23, when the power storage unit 93 is switched to the discharging stopped state, the voltage of the power storage unit 93 returns to a value higher than the threshold voltage Vth. In this case, since the voltage of the power storage unit 93 returns to a value higher than the threshold voltage Vth before an elapsed time period TC exceeds the predetermined time period TJ, the countermeasure processing is not executed.

Thereafter, at a timing t24, the charging of the power storage unit 93 starts, and the charging of the power storage unit 93 ends at a timing t25. At a timing t26, when the power storage unit 93 is switched to the discharging state again, the voltage of the power storage unit 93 drops sharply due to the internal resistance of the power storage unit 93. At a timing t27, when the voltage of the power storage unit 93 falls below the threshold voltage Vth again, the measurement of the elapsed time period starts. The control unit 13 calculates the total time period which is obtained by adding the elapsed time period previously stored to a current elapsed time period TD. At a timing t28, when a total time period (TC + TD) exceeds the predetermined time period TJ, the control unit 13 executes the countermeasure processing. In the present embodiment, since the countermeasure processing is to stop the discharging of the power storage unit 93, the discharging of the power storage unit 93 is stopped. As a result, the voltage of the power storage unit 93 returns to a value higher than the threshold voltage Vth.

The following description relates to the effect of the second embodiment. There may be a case where discharging of the power storage unit 93 is stopped before the elapsed time period exceeds the predetermined time period TJ, and the voltage of the power storage unit 93 returns to be higher than the threshold voltage Vth which is set at the start voltage. In this case, when the voltage of the power storage unit 93 falls below the threshold voltage Vth again, and if the previous deterioration is remaining, the power storage unit 93 could deteriorate to a certain degree before the elapsed time period after the voltage falls below the threshold voltage again exceeds the predetermined time period. Therefore, the in-vehicle backup control device 2 of the second embodiment is configured to execute the countermeasure processing when the total time period exceeds the predetermined time period TJ. Thus, the in-vehicle backup control device 2 of the second embodiment can execute the countermeasure processing in a situation where a certain degree of cumulative deterioration is anticipated as a result of the voltage of the power storage unit 93 falling below the threshold voltage Vth a plurality of times when the start voltage is set as the threshold voltage Vth.

In the present embodiment, the threshold voltage Vth is set to be a voltage that is the same as the start voltage at which the chemical reaction of the power storage unit 93 starts. Thus, the in-vehicle backup control device 2 of the second embodiment can execute the countermeasure processing in a situation where a certain degree of cumulative deterioration is anticipated as a result of the voltage of the power storage unit 93 falling below the threshold voltage Vth a plurality of times.

### <Other embodiments>

The present disclosure is not limited to the embodiments described in the above description and the figures. For example, the features of the embodiments described above or below can be combined in any manner within a range not contradictory. Furthermore, any of the features of the embodiments described above or below can be omitted unless clearly indicated as being essential. Furthermore, the above-described embodiments may be modified as follows.

In each of the above embodiments, the discharging unit is formed by a charging/discharging circuit capable of performing both a discharging operation and a charging operation, but may be formed by a discharging circuit capable of performing only the discharging operation.

The above embodiments disclosed herein should be construed as being illustrative in all respects and not limiting. Note that the range of the present invention is not limited to the embodiments disclosed herein, and is intended to include all modifications within the scope indicted by the claims or the scope equivalent to the claims.

### REFERENCE SIGNS LIST

- 1: backup device
- 2: backup control device
- 10: switching unit
- 11: charging/discharging unit (discharging unit)
- 12: temperature detection unit
- 13: control unit
- 90: power supply unit
- 91: load (power supply target)
- 92: power path
- 93: power storage unit
- 94: first conduction path
- 95: second conduction path
- 100: power supply system
- TA: elapsed time period
- TB: elapsed time period
- TC: elapsed time period
- TD: elapsed time period
- TJ: predetermined time period
- Vth: threshold voltage

## Claims

1. An in-vehicle backup control device used in an in-vehicle power supply system including a power supply unit for supplying power to a power supply target, and a power storage unit for supplying power to the power supply target when power supply from the power supply unit is in an abnormal state, the in-vehicle backup control device comprising:
a discharging unit configured to discharge the power storage unit; and
a control unit configured to control the discharging unit, wherein
the control unit is configured to execute countermeasure processing when a voltage of the power storage unit falls below a threshold voltage and an elapsed time period during which the voltage of the power storage unit is below the threshold voltage exceeds a predetermined time period.

2. The in-vehicle backup control device according to claim 1, wherein the control unit is configured to set the threshold voltage based on a temperature of the power storage unit.

3. The in-vehicle backup control device according to claim 1 or 2, wherein the control unit is configured to execute the countermeasure processing when the voltage of the power storage unit becomes higher than the threshold voltage without the elapsed time period exceeding the predetermined time period and then falls below the threshold voltage again, and a total time period during which the voltage of the power storage unit is below the threshold voltage exceeds the predetermined time period.

4. The in-vehicle backup control device according to claim 1 or 2, wherein the countermeasure processing is processing of stopping discharging of the power storage unit.
